# EUROPEAN PATENT SPECIFICATION

(11) **EP 4 492 268 B1**
(45) Date of publication and mention of the grant of the patent: **18.11.2026**
(21) Application number: 24187536.8
(22) Date of filing: 09.07.2024
(51) Int. Cl.: G06F 21/55, H04L 9/40, H04W 12/12, G06N 3/02, G06N 3/04, G06N 3/08, G06N 20/00, G06V 10/82, G06N 3/045

(54) **DATA LEAKAGE DETECTION METHOD IN A SERVERLESS CLOUD ENVIRONMENT**
VERFAHREN ZUR ERKENNUNG VON DATENLECKS IN EINER SERVERLOSEN CLOUD-UMGEBUNG
PROCÉDÉ DE DÉTECTION DE FUITE DE DONNÉES DANS UN ENVIRONNEMENT EN NUAGE SANS SERVEUR

(30) Priority: 10.07.2023 IL 30437023
(43) Date of publication of application: 15.01.2025
(73) Proprietor: Deutsche Telekom AG, 53113 Bonn (DE)
(72) Inventor: LOEWENTHAL, Amir, 8502500 Meitar (IL); ELYASHAR, Aviad, 8474915 Beer Sheva (IL); MIMRAN, David, 6215505 Tel Aviv (IL); BRODT, Oleg, 8471621 Beer Sheva (IL); ELOVICI, Yuval, 7986400 Arugot (IL); SHABTAI, Asaf, 7684200 Hulda (IL); LEHMAN, Heiko, 12587 Berlin (DE)
(74) Representative: Schmidt, Christian

(56) References cited:
- US-A1- 2022 129 540
- US-A1- 2023 208 855
- ISLAM MOHAMMAD S ET AL: "Anomaly Detection in a Large-Scale Cloud Platform", 2021 IEEE/ACM 43RD INTERNATIONAL CONFERENCE ON SOFTWARE ENGINEERING: SOFTWARE ENGINEERING IN PRACTICE (ICSE-SEIP), IEEE, 25 May 2021 (2021-05-25), pages 150 - 159, XP033929949, ISBN: 978-1-6654-3869-8, [retrieved on 20210412], DOI: 10.1109/ICSE-SEIP52600.2021.00024
- HASSAN WAJID ET AL: "Is Public Cloud Computing Adoption Strategically the Way to Go for All the Enterprises?", 2019 IEEE 5TH INTL CONFERENCE ON BIG DATA SECURITY ON CLOUD (BIGDATASECURITY), IEEE INTL CONFERENCE ON HIGH PERFORMANCE AND SMART COMPUTING, (HPSC) AND IEEE INTL CONFERENCE ON INTELLIGENT DATA AND SECURITY (IDS), IEEE, 27 May 2019 (2019-05-27), pages 310 - 320, XP033609069, DOI: 10.1109/BIGDATASECURITY-HPSC-IDS.2019.00064

## Description

### Field of the Invention

The present invention relates to the field of cyber security. More particularly, the invention relates to a data leakage detection method in a serverless cloud environment.

### Background of the Invention

Serverless computing (a cloud computing execution model in which the cloud provider allocates machine resources on demand, taking care of the servers on behalf of their customers) allows organizations to build and deploy software and services without the need to maintain, provide, or scale resources, such as physical or virtual servers [20]. Serverless computing eliminates the need for dedicated computing resources by relying on a more dynamic architecture. Using this architecture simplifies and accelerates application development and enables automatic scaling and integration in future expansions, such that developers only pay for the resources their applications consume. Serverless computing offers both backend-as-a-service (BaaS - a cloud service model in which developers outsource all the behind-the-scenes aspects of a web or mobile application so that they only have to write and maintain the frontend) and function-as-a-service (FaaS - is a serverless backend service allowing developers to write modular pieces of code on the fly that can be executed in response to certain events) [21], with FaaS being the primary serverless model [12]. Serverless functions (e.g., AWS Lambda, Azure functions) are small pieces of business logic within a serverless application, which are designed to be stateless and triggered by predefined events.

The shift from on-premises to cloud computing has confronted cybersecurity defenders with a larger attack surface and a growing number of challenges [34] as specified below.

When the infrastructure is fully managed by the cloud provider, developers can concentrate solely on the application development cycle. Even though this may accelerate the development, it is not ideal from a cybersecurity perspective, since organizations cannot modify the underlying infrastructure settings to suit their needs. The defense paradigm that was once relied upon in on-premise settings, does not apply to cloud-based and serverless applications. In most cases, security teams cannot add lower-level defense schemes and monitoring capabilities, so the security team must rely on the existing measures and logging provided by the platform provider. Consequently, their capability to assess and analyze their system's threats and vulnerabilities, in order to determine the organization's defense posture, is limited [14].

Short development time poses a challenge to security teams. In a setting with agile development, many code changes are made and new resources are often created, making the monitoring efforts of the security teams much more challenging. The addition of new resources entails additional permissions to configure and more logs (log data is the records of all the events occurring in a system, in an application, or on a network device) which create more data to maintain and analyze. The frequent code changes in serverless functions slow down the security teams' efforts to maintain secure environments by frequently and rapidly changing the attack surface, while exposing the environment to new threats.

The increased attack surface, emerging from interconnections with other services and openness to other systems, also poses a challenge. For example, in contrast to traditional applications, serverless functions have a much larger attack surface for code injection due to their innate ability to receive input from multiple sources, including other functions, web pages, and application users [23]. In addition, managing and configuring many cloud services may result in permission misconfigurations (incorrect or configurations of an information system or system component that may lead to vulnerabilities) that expose both the application to misuse and the permissions to exploitation by malevolent actors. Misconfigurations can arise as a result of careless insider actions, but they can also be caused intentionally by a malicious insider. Despite the many security challenges in the serverless paradigm, atomic units of functions allow high-granularity function-level logging. High-resolution logging enables cyber defenders to gain a deeper understanding of serverless applications. This can result in an improved cyber posture and quicker and more effective cyber defense.

Each type of threat presents unique challenges, where the main challenge is the high volume of activities that occur in a serverless application's lifetime. When a large number of data resources is used, there is a greater risk that sensitive information will be exposed. The execution of a large number of serverless functions results in high variability in the system, which interferes with the ability to detect the serverless functions that deviate from their intended purpose. Also, detecting misuse in a serverless environment, based solely on querying the activity logs with the available tools is often found difficult.

Some efforts were made to reduce the potential threats when using serverless computing [16]. Some existing solutions are based on static analysis and others are based on dynamic system analysis. Static analysis solutions can be used to audit and detect "bad practices" concerning serverless security [22, 29]. This approach does not detect threats from the outside (e.g., injections) or scale well in fast-moving, dynamic environments. Static analysis cannot differentiate between malicious and legitimate code, so malicious code may appear clean to such methods. Methods that are based on dynamic analysis [4, 15] used network-level logging and prevents threats by blocking malicious requests with an additional layer added to the functions' runtime environment, but at the cost of significant overhead. Existing solutions generally aimed at preventing the introduction of malicious code via the supply chain or injection attacks, rather than identifying malicious behavior. This results in a high rate of false alerts.

US 2022/129540 discloses techniques for detecting runtime security threats within serverless functions developed and deployed for execution in hybrid clouds and other cloud-based deployment environments. The execution of the serverless functions is monitored, using a monitoring layer in the controlled environment to capture runtime data including container application context statistics, serverless function input and output data, and runtime parameter snapshots of the serverless functions. The runtime data for serverless functions may be provided to machine-learning models configured to perform supervised and/or unsupervised learning techniques to detect runtime security threats associated with the serverless functions. In various examples, the machine-learning algorithms selected may include supervised learning techniques based on data correlations, regression analyses, and pattern matching with ground-truth data associated with existing known runtime security threats. Unsupervised learning techniques may analyze large amounts of serverless function execution data to detect patterns and trends in relevant execution data metrics and may identify potential runtime security threats based on deviations from predictions. However, the workflow of US 2022/129540 is an intrusive, infrastructure-dependent solution since US 2022/129540 first exports each function into a vendor-controlled container sandbox, captures fine-grained CPU, memory, I/O and network traces, and then feeds them into supervised and unsupervised models.

US 2023/208855 discloses a system and method to detect and mitigate FaaS security attacks in daisy-chained functions in a Cloud Native application scenario for any serverless functions and/or Backend-as-a-Service (BaaS) frameworks. The method comprising: receiving, by a process, an executed function flow of a daisy chained serverless function-as-a-service (FaaS) function, the executed function flow having been injected with a particular trace identifier in response to an initial event trigger and span identifiers having been injected by each service that was executed; generating, by the process, a serverless flow graph associated with the particular trace identifier based on linking a path of serverless functions according to correlation of the span identifiers between the serverless functions; performing, by the process, a trace-based analysis of the serverless flow graph through comparison to a baseline of expectation; detecting, by the process, one or more anomalies in the serverless flow graph according to the trace-based analysis; and mitigating, by the process, the one or more anomalies in the serverless flow graph. The techniques are intended to simplify the detection of security threats such as function event-data injection, function code injection attacks, and role/privilege escalation threats in a hybrid-cloud based FaaS environment. Specifically, the techniques are intended to automatically deduce function chaining/dependencies in the form of a call-graph that can then be leveraged to trigger the detection of an anomaly. In various embodiments, such techniques may employ one or more supervised, unsupervised, or semi-supervised machine learning models. Generally, supervised learning entails the use of a training set of data, as noted above, that is used to train the model to apply labels to the input data. On the other end of the spectrum are unsupervised techniques that do not require a training set of labels. However, US 2023/208855 mitigates security threats in daisy chained serverless FaaS functions using offline container sandbox that re-executes uploaded functions, collects low-level runtime traces and feeds them to a mix of supervised/unsupervised ML for threat scoring. US 2023/208855 requires sandbox (i.e., code access) and graph build-up, as well as re-execution, containerisation and synthetic traffic.

It is, therefore, an object of the present invention to provide a permission misuse detection method in a serverless cloud environment, for preventing permission misuse by exploiting misconfiguration of cloud entities to misuse their permissions.

It is another object of the present invention to provide a permission misuse detection method in a serverless cloud environment, for preventing data leakage exposing sensitive data via publicly available data resources.

Other objects and advantages of the invention will become apparent as the description proceeds.

### Summary of the Invention

The invention is defined by the appended claims. In a serverless cloud computing environment consisting of one or more computerized devices having a memory and at least one processor and being capable of executing and running application code, a method for data leakage detection in a serverless cloud environment, comprising:
a) providing an unsupervised deep learning data leakage detection model for detecting an act of writing sensitive information to a public access bucket, due to misconfigured serverless function; and
b) using the model to detect a predefined type of writing information to the bucket in an environment that contains legitimate activities involving the bucket.

The method may further comprise the step of detecting of misconfiguration or an elevation of permissions in a specific serverless function.

LSTM autoencoders may be used to model the normal behavior of each serverless function.

In one aspect, the data leakage detection model may perform the following steps:
a) generating graph representations of the cloud environment;
b) generating features for each node in the graph;
c) training a deep autoencoder to reconstruct each node's features;
d) predicting the anomaly score of each node, based on the autoencoder's reconstruction error.

The data leakage detection model may utilize graphs and use a deep autoencoder to learn the connections between different system resources.

The method may further comprise a preprocessing phase, in which the model receives a stream of events and returns a set of graph feature records that serve as input to the deep autoencoder.

The preprocessing phase may consist of:
a) graph construction; and
b) feature extraction.

The behavior of the different services in the cloud environment, may be obtained by constructing directed weighted multigraphs that contain multiple edges between two nodes.

The behavior of each data resource in the system may be represented by graph features extracted for each node, for each graph representation, where the nodes are represented using common centrality measures that are chosen from graph theory.

Whenever the graph represents a serverless application, centrality measures may be used yo identify security risks.

The centrality measures may be selected from the group of: degree, normalized degree, load centrality, harmonic centrality, local reaching centrality, trophic levels, PageRank, and closeness centrality.

A serverless cloud computing environment consisting of one or more computerized devices having a memory and at least one processor and being capable of executing and running application code, said at least one processor is adapted to:
a) detect data leakage in said serverless cloud environment by providing an unsupervised deep learning data leakage detection model for detecting an act of writing sensitive information to a public access bucket, due to misconfigured serverless function; and
b) use said unsupervised deep learning data leakage detection model to detect a predefined type of writing information to said bucket in an environment that contains legitimate activities involving said bucket.

### Brief Description of the Drawings

The above and other characteristics and advantages of the invention will be better understood through the following illustrative and non-limitative detailed description of preferred embodiments thereof, with reference to the appended drawings, wherein:
- Fig. 1 shows an *ApplicationFlow* of a booking process in the testbed;
- Fig. 2 shows the data flow pipeline of the threat detection models;
- Fig. 3 shows an example of graph representation using multi-graphs and weighted edges;
- Fig. 4 shows an event vector associated with a put item operation on DynamoDB;
- Fig. 5 shows a flowchart describes using LSTM autoencoder for anomaly detection;
   based on the reconstruction error; and
- Fig. 6 shows a graph of GRLAD's reconstruction errors for the destination bucket in the VOD application.

### Detailed Description of the Invention

The present invention provides a data leakage detection method in a serverless cloud computing environment that consists of one or more computerized devices with a memory and at least one processor, which is capable of executing and running application code. The proposed method is directed to overcome serverless threats: (i) permission misuse exploiting misconfiguration of cloud entities to misuse their permissions, and (ii) data leakage that exposes sensitive data via publicly available data resources. In addition, the present invention related to compromised functions, that are legitimate serverless functions which are taken advantage of, in order to execute malicious code and perform unauthorized actions in the system.

The present invention provides three threat detection models for serverless environments based on deep learning anomaly detection models. Each model is designed to detect different types of threats, utilizing the cloud provider's native monitoring tools, and generates features which are appropriate for each type of threat.

The present invention provides a set of unsupervised deep learning anomaly detection models that utilize the cloud provider's native monitoring tools to detect abnormal behavior of serverless applications. Two of the models propose a use-case-specific approach, i.e., each threat detection model is aimed at detecting a specific predefined type of threat with its unique patterns and behavior.

By focusing on the specific features of each threat type, the aim is to reduce false alarms. The third model is more generic - it utilizes fine-grained logging (that enables fine-grained control over logging on a per-part basis of a program, while setting different log levels for different parts of an application, tailoring the level of detail to each specific component) to detect both known and unknown threats, and it is ideal for both incident detection scenarios in contained environments or periodic testing. The unique features extracted by each of the threat detection models enrich the basic information provided by the activity logs and create a more informative perspective on the environment.

The Permission Misuse Detection (PMD) model filters log records that represent an interaction between a resource and the initiating entity (a function or a user through an API call). The records are then transformed into a sequence of tokens. A predefined number of sequential tokens are then transformed into an n-gram model (a collection of n successive items in a text document that may include words, numbers, symbols, and punctuation), and the model attempts to predict the last token in the sequence in order to detect an anomaly. The Graph Representation of Logs for Access Detection (GR-LAD) model aggregates the log records and builds graph representations of the cloud services. The model uses graph theory features to learn the interactions between services and can detect anomalies in such interactions.

The Compromised Function Detection (CFD) model uses high-resolution logging of the serverless functions and generates multivariate sequences (used in a process of predicting future values of multiple variables) to represent each serverless function instance as a flow of the function's internal operations. By analyzing these sequences, it can detect anomalies within the function flow itself, as well as within individual events in the function. Since the CFD model can recognize hidden patterns in the behavior of each function, it presents a generic approach, rather than targeting specific threats. While each model has unique features, none of them require changes to the existing infrastructure as they utilize the existing monitoring tools in the cloud environments. To evaluate the proposed models, a serverless evaluation testbed was created in an AWS (Amazon Web Services platform provides fully featured services and is considered the most comprehensive cloud platform) environment that contains two open-source serverless applications. In the testbed, a benign user activity was simulated to generate logs, as well as a variety of cybersecurity attacks. In the evaluation, multiple metrics were used to assess the proposed models' precision, credibility, and ability to detect the attacks implemented in the testbed. The evaluation showed that the three threat detection models successfully detected most of the implemented attacks (detection rate above 99%) while keeping the number of false alarms below 3%. Such capabilities are crucial for increasing the security teams' performance and improving the security of today's widely used serverless computing platforms.

### Advantages:

- The present invention presents three threat detection models for serverless cloud environments. These models are built on top of the cloud provider's various logging and monitoring tools, and security teams can use them without the need for external collaboration (e.g., asking a developer to change the source code of a function).
- The present invention provides a unique anomaly detection dataset for the field of serverless security. The dataset contains data reflecting the activity of two distinct applications, each developed in a different serverless paradigm and has its own unique characteristics.

Serverless is an event-driven framework in which each function runs isolated in its own runtime environment. When addressing such environments, it is necessary to take the unique threat landscape they present into account. The present invention focuses on the detection of two specific threats in the serverless threat landscape: permission misuse and data leakage. The method of the present invention also covers the detection of general threats affecting serverless functions.

Permission Misuse: Permission misuse occurs when a user's (both human and system) permission is used inappropriately, a situation which occurs when the resources' permissions/privileges are misconfigured. The misuse of privileges is an intentional, malicious attack pattern. In 2021, most data breaches in this category were caused by privilege abuse or data mishandling [25]. While cloud platforms offer basic protection, they are focused on the overall security of the computing environment and tend to neglect internal threats; additionally, companies that utilize federated users (users that have permissions in multiple cloud platforms) create a far more complex permission matrix. There are also multiple permission entities in the world of cloud platforms that require extra vigilance by the security team. The attack surface in permission misuse attacks consists of the permissions themselves, meaning, the fewer permissions in total and per user, the better. Permission misuse is responsible for major problems, as it creates potential back doors and harms data confidentiality. In the present invention, misuse is considered as any interaction that deviates from the intended use of serverless function permissions.

### Data leakage:

Data leakage is the exposure of sensitive data outside the organization. Data sources are an integral part of serverless applications, and the event-driven nature of the serverless paradigm encourages a transfer of data between serverless functions. These properties of serverless environments can cause data leakage when combined with misconfigured resources. One of the most common data leakage scenarios in AWS-based environments occurs when Amazon Simple Storage Service (S₃) is misconfigured, and its permissions are set as public [7, 27].

The present invention aim is to detect the preliminary stage of the leakage. The method of the present invention focuses on the act of writing sensitive information to a public access bucket. This action can be caused by compromising a misconfigured serverless function and forcing it to write the information to the bucketb (a reserved amount of memory that holds a single item or multiple items of data). The challenge with such attacks is to detect the malicious action of writing information to the bucket in an environment that contains many legitimate activities involving the bucket. In addition, the detection of misconfiguration or an elevation of permissions (an increase of privileged access beyond what a user, application, or other asset already has) in a specific serverless function is a challenge of its own.

### Compromised Functions:

Serverless functions are the main component of serverless computing. Their nature provides attackers with many new opportunities to exploit the functions' permissions to accomplish their goals [3]. Serverless functions are event-driven; therefore, more potential vulnerabilities can be exploited by attackers to compromise a function. Serverless functions are also stateless and short-lived, and as a result, it is more complicated to determine their role within the application flow and the context in which they run. Additionally, although the cloud provider is responsible for managing all the infrastructure needed for the functions to run, security management is still shared between the cloud provider and the user. Users are responsible for configuring the function's code, its dependencies, the resources it uses, and the identity and access management. The method of the present invention defines a compromised serverless function as one that acts in a way that was not intended as a result of an intrusion by a malicious actor. The challenge is to detect the compromised functions among the large number of functions running simultaneously and using the same resources, as there can be very minor differences between compromised and legitimate functions.

The present invention focuses on serverless computing, which consists of the following elements:
- Serverless functions - Event-driven compute services that allow running code without provisioning or managing servers and automatically manage the computing resources required by that code.
- Data Resources - Cloud services that are responsible for data storage.
- Trigger events - Groups of services that enable the event-driven nature of serverless applications, e.g., EventBridge, API Gateway, and Step Function in AWS. These services trigger and orchestrate the activation of serverless functions.
- Monitoring tools - Services that audit and monitor the activities of the different entities in the cloud environment. Monitoring tools can monitor both interactions between different cloud entities and the inner flow of serverless functions.

The evaluations are performed using applications that are deployed on the AWS cloud environment. In AWS, the AWS Lambda (a serverless compute service that runs your code in response to events and automatically manages the underlying compute resources) implements serverless functions. The AWS Simple Storage Service (S₃) was used as a data storage service and AWS DynamoDB (a serverless database service that allows developing applications at any scale) as a database service. The following three trigger events were used: (1) EventBridge - A serverless event bus (a router that receives events and delivers them to zero or more destinations,or targets) used to trigger event-driven functions (e.g., trigger lambda functions on timed events). (2) API Gateway - A service that enables the maintenance of RESTful APIs (an interface that two computer systems use to exchange information securely over the internet). In the evaluation environment, the application receives Application Programming Interface (API) requests from users, and the API Gateway service (an API management tool that serves as a single point of entry into a system, sitting between the application user and a collection of backend services) triggers Lambda functions in response. (3) Step Function - A workflow service used to orchestrate micro-services, build pipelines using AWS services, and combine multiple Lambda functions (anonymous user-defined functions) into responsive serverless applications and micro-services. The Step Function service allows the orchestration of complete application workflows. Finally, the following monitoring and application logging tools in the AWS evaluation environment were used:
- CloudTrail2 - This service provides logs for every API call in the cloud environment. These API calls may be a database operation, an invocation of a serverless function, or any other use of an AWS service by the function.
- CloudWatch3 - This tool collects and monitors the logs from CloudTrail.
- XRay4 - This debugging tool collects detailed information about application flows' activities, tracks the relationships among different components, and builds an execution graph for each session.

### Threat detection in serverless environments

In the domain of serverless security, studies that use static analysis methods, studies that use dynamic analysis methods were discussed, and those that use a combination of the two. In static analysis, the source code of an application is checked without being executed. Obetz et al. [22] proposed a static analysis technique for extended call graphs that considers the relationships among functions and other backend services. The information that can be obtained through static analysis is, however, limited.

The dynamic analysis consists of testing and evaluating an application during its runtime. In several studies, dynamic analysis techniques were suggested to better understand the activity behind the scenes when an application is running. Some focused on the application's data flow [1, 4], while others focused on the application's control flow [15, 26]. Alpernas et al. [1] introduced Trapeze, a dynamic information flow control for JavaScript serverless applications. Their solution, however, requires modifying all services being used by the application and it makes assumptions about the serverless functions programming language. Furthermore, the proposed solution has a higher overhead than other existing solutions in the field [4]. Datta et al. presented VALVE [4], a platform for dynamic information flow control that uses network-level tainting to monitor functions' activity and detect attacks. The VALVE platform (Valve Corporation is a video game developer, publisher and digital distribution company) monitors each API request that the serverless function generates by adding an agent to the function's execution container. With the monitored API requests, VALVE generates flow policies of the events in the system. The policies are then modified by a workflow developer. Similar to Trapeze, the VALVE platform relies on the collaboration of third-party services to track and monitor all of the functions' activity; the VALVE platform also requires the use of embedded agents. Though the information the proposed solutions gather from third-party services could be very helpful to security models, it may be possible to create a solution that obtains very good results without changing the existing infrastructure, as required by Trapeze and VALVE. Jagen et al. [15] introduced SecLambda, an architecture for securing serverless applications. The authors' solution provides an extension that monitors and blocks requests within each serverless runtime environment, in addition to a control program that monitors the system. In this case, control flow graphs are built based on the functions within a system, and interactions that do not follow the paths in these graphs are blocked. In contrast to [1, 4, 15], which necessitated the use of an additional framework, which could itself introduce vulnerabilities, the threat detection models of the present invention method do not use such a framework within the serverless execution environment and instead use AWS's existing logging services to monitor API requests. Sankaran et al. [26] proposed WILL.IAM, a novel access control flow model to secure serverless applications. The policies built by the authors are workflow-based rather than function-based, which is aligned with the Identity and Access Management (IAM) permissions (provide fine-grained access control to help establishing permissions that determine who can access which AWS resources under which conditions) of AWS. The aforementioned studies focused on previously observed legitimate flows and specific patterns of serverless applications, without attempting to gain knowledge on more advanced patterns, while the objective is to increase understanding of serverless applications' behavior patterns and identify anomalies in them. By doing so, the aim is to detect both known and unknown attacks that might have more sophisticated signatures. Moreover, the suggested solutions are mainly preventative and handle attacks in cloud-based environments by reducing the attack surface. The method of the present invention, on the other hand, focuses on the detection of anomalies and allows the user to analyze their severity.

### Log analysis for anomaly detection

Logging and monitoring systems' activities are essential for identifying the state of the system, its performance, and an overall picture of it. System logs are crucial for the ability to debug and perform root cause analysis and anomaly detection. As the size of logs grows, it becomes impossible to use conventional anomaly detection methods based primarily on manual inspection. In response to this issue, the areas of automated log analysis and anomaly detection have been extensively studied. Prior studies used traditional machine learning methods for anomaly detection, such as SVM [6] and clustering [18], as well as deep learning methods, such as LSTM [5, 31, 32], autoencoders (an autoencoder is a neural network consisting of an encoder and a decoder trained to learn reconstructions close to the original input) [33], transformers [10], and graph embedding [17]. Other studies modeled logs generically [5, 30] or modeled specific activities like network traffic [13], user activity [28], or other domains [11]. Deep learning methods have been shown to perform better than conventional anomaly detection methods when it comes to learning feature representations and anomaly scores and detecting anomalies based on them in real-world applications [24]. The models of the present invention also utilize log data to detect anomalies, but the techniques and data preprocessing were customized for the analysis of serverless applications logs in order to consider all of their unique features (e.g., combining log files that contain different details with different granularity levels about a specific request so one can gather as much information as possible).

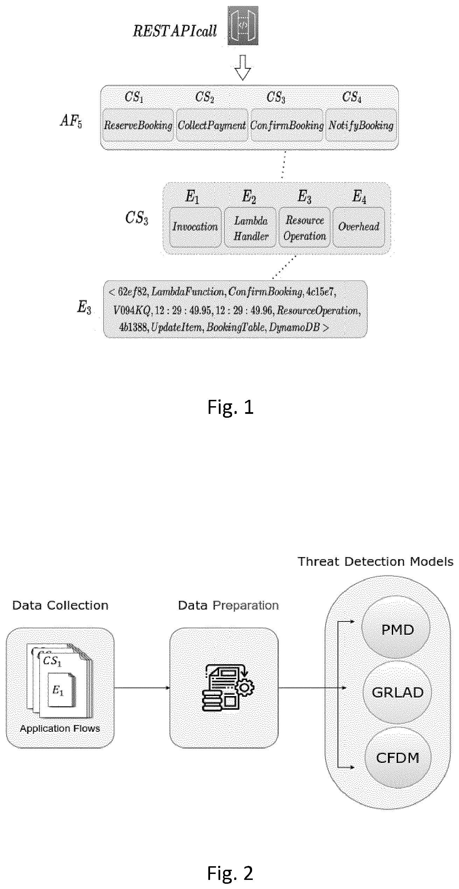

The log data used for the threat detection models contains Application Flows that are composed of Contextual Sequences of events. An Application Flow is a set of function flows and resource operations that share common interaction patterns across the multiple executions of an application, representing a logical process or functional unit within a larger application. An application flow is usually triggered by an action outside of the cloud environment (e.g., REST API call or file upload to public storage service). An example of an application flow in the testbed is the Booking Process presented in Fig. 1.

*A ContextualSequence* is composed of the events that occurred during a given cloud service's runtime. Each event is defined by the following tuple:
*< appFlowId, contextType, contextName, contextld, eventld, startTime, endTime, eventType, parentEventld, eventOperation, eventResource, eventResourceType >*
where,
- *appFlowId* is the identifier of the *ApplicationFlow* the event occurred in.
- *contextType* is the type of cloud service aggregating the set of *ContextualSequences* of events in which the event took place; for example, a serverless function (i.e., Lambda function) or an API gateway.
- *contextName* is the name of the specific cloud service aggregating the *ContextualSequence* of events in which the event took place. Figure 1 presents an *ApplicationFlow* containing *fourContextualSequences* with their *contextName.* For example, the third *ContextualSequence's contextName* is "Confirm Booking".
- *contextld* is the identifier of the sequence of events in which this event took place.
- *eventId* is the identifier of the event.
- *startTime* is the event's start time.
- *endTime* is the event's end time.
- *eventType* is the type of event (e.g., initialization, invocation, overhead, internal function, resource operation).
- *parentEventld* is the identifier of the event's predecessor. In some cases, an event may be triggered by another event. In such cases, the log provides information on the calling event. For example, in Fig. 1 the "Resource Operation" event is called by the "Lambda Handler" event.
- *eventOperation* is the operation of the event.
- *eventResource* is the event operation's target resource.
- *eventResourceType* is the cloud resource type of the event operation's target resource.

Note that the *eventOperation, eventResource,* and *eventResourceType* attributes are unique to events with an *eventType* of "Resource Operation." For other events, these attributes are *NULL.*

Fig. 1 shows an *ApplicationFlow* of a booking process in the testbed. The flow consists of four *ContextualSequences.* The "Confirm Booking" *(CS3) ContextualSequence* includes four events, and the "Resource Operation" event is defined by the tuple E3.

### Threat detection pipeline

Fig. 2 shows the data flow pipeline of the threat detection models. Fig. 2 presents the data flow pipeline of the threat detection models. The detection pipeline consists of the following steps:
**Data collection** - The cloud provider's logging and monitoring tools provide the data for the anomaly detection models. The most popular cloud providers (i.e., AWS, Azure, Google Cloud) include such tools in their platforms. Each of the detection models uses monitoring tools to collect the raw logs of the cloud environment and works under two basic assumptions: (i) The logs used in the analysis were not compromised, and the information they contain truly reflects the activity in the system. (ii) The data used to train the models of the present invention only contains information about the benign activity of the system and reflects its normal behavior. Data filtering and preprocessing - Each threat detection model filters and processes the raw log files to produce the appropriate data representation used by the model. These processing methods include various feature extraction and data filtering methods. Threat detection models - The processed data is inserted into the three threat detection models: The Permission Misuse Detection model (PMD), Graph Representation of Logs for Access Detection model (GRLAD), the Compromised Functions Detection model (CFD). PMD and GRLAD are focusing on the Permission Misuse and Data Leakage threat types respectively. CFD is focused on Compromised Functions in general.

### Permission Misuse Detection model

PMD builds contiguous permission usage event sequences (n-gram model) and uses special tokens to annotate each permission usage of the cloud services. Then, in the anomaly detection phase, the model estimates the likelihood *l* of each event given the previous n -1 events (i.e., the conditional probability). When the likelihood is below the predefined threshold *thr,* PMD defines it as an anomalous activity and raises an alert.

**Preprocessing** - In the preprocessing phase, PMD receives a stream of "Resource Operation" eventType events and returns a contiguous sequence of n permission usage events (i.e., n-grams) which serve as input for the LSTM model. The input for PMD's preprocessing phase is a sequence of *ApplicationFlows;* the order of the sequence is determined by the *startTime* of an event. The prepossessing phase consists of three steps:
(1) Extract three-tuple elements of *contextName, eventResource* and *eventoperation* = P from the stream. Each three-tuple element is then converted to a single token: *P = {C, R, O*}- > *P =* {*C*_*R*_*O*}.
(2) Insert special tokens [REQ] and [SEP] after each unique *contextID* and *appFlowID,* respectively.
(3) Create a contiguous sequence of length n.

The output of this phase is a set of samples consisting of tuples of s, *y,* where s is the sequence of *n* - 1 preceding events and y is the *n'th* observed event. An example of the prepossessing phase's output when n =8 is as follows: ${s}_{2} = \left\{{P}_{t - 3}, {P}_{t - 2}, \left[REQ\right], \left[SEP\right], {P}_{t - 1}, {P}_{t}, \left[REQ\right]\right\} , {y}_{2} = \left[SEP\right]$ ${s}_{1} = \left\{\left[REQ\right], {P}_{t - 3}, {P}_{t - 2}, \left[REQ\right], \left[SEP\right], {P}_{t - 1}, {P}_{t}\right\} , {y}_{1} = \left[REQ\right]$ ${s}_{0} = \left\{{P}_{t - 4}, \left[REQ\right], {P}_{t - 3}, {P}_{t - 2}, \left[REQ\right], \left[SEP\right], {P}_{t - 1}\right\} , {y}_{0} = {P}_{t}$

Anomaly detection - Given a new instance *yt* , PMD receives the preceding events *sₜ* and returns (a) the likelihood *lₜ* of the observed event *yₜ* , and (2) the predicted event *y*^*ₜ* with the highest likelihood. LSTM neural networks are effective in modeling system log sequences [2, 5, 24, 31]. During the model's training, normal activity logs were fed to the LSTM which was tasked with predicting the *n'th* permission usage event *yₜ* given n - 1 preceding events *sₜ* . Then, the LSTM is used to estimate the likelihood *lₜ* of new instances. The likelihood was compared to the predefined threshold *thr,* and if *lₜ < thr,* PMD declares the event as an anomaly.

### Data Leakage Detection model

The goal of GRLAD is to detect anomalous behavior in the access to the cloud environment's data resources. The model gains a deeper understanding of the system's structure by aggregating a large number of events on a graph. Then, the model utilizes the graphs and uses a deep autoencoder to learn the connections between the different system resources. The model consists of the following steps: (1) Generate graph representations of the cloud environment. (2) Generate features for each node in the graph. (3) Train a deep autoencoder to reconstruct each node's features. (4) Predict the anomaly score of each node based on the autoencoder's reconstruction error (the difference between the original input and the reconstruction output in the autoencoder).

**Preprocessing** - In the preprocessing phase, GRLAD receives a stream of events and returns a set of graph feature records (graph features extracted from algorithms that run over data structured as a graph) that serve as input to the deep autoencoder. Similar to PMD (described above), GRLAD filters Resource Operation events. The preprocessing phase consists of two steps: graph construction and feature extraction.

**Graph representations** - To represent the behavior of the different services in the cloud environment, directed weighted multigraphs were constructed. Given a set of filtered events, let Δ*T* be the logs collection period. Δ*T* is divided into equal time windows *w*₁, *..., wₘ.*

By aggregating the filtered events in a time window *wi* , a graph is constructed *G_{wi}* = (*V_{wi} , E_{wi} ,W_{wi}* ). Each *v* ∈ *V_{wi}* represents the *contextNames* and *evetResources* of the events in time window *wᵢ* . An edge < *u, v* >∈ *E_{wi}* means that there was an operation between the *contextNames* and *evetResource* that are respectively represented by *u* and *v* in time window *wᵢ*.

The graph representations of the system are multigraphs, which are graphs that contain multiple edges between two nodes. Therefore, every type of *eventOperation* between two entities will have a unique edge between the entities' nodes. *W_{wi} : E* → N is the weight function, which is calculated by aggregating the number of operations occurring between two entities in a time window *wᵢ*.

In the experiments, two different weight functions were used. One is the sum of the operations, and the other is the inverted sum of operations. For example, given two cloud entities in AWS, a Lambda function *λ*₁ and an S₃ bucket S₁, when *λ*₁ performs five getObject operations and three put Object operations on bucket *S*₁ in time window *wᵢ* , *V_{wi}* will include two nodes *u*_{*λ*1} and *v*_{*s*1} *,* and *Ewi* will include two edges between these nodes. In this example, *W_{wi}* is a function that counts the number of operations in the time window *wᵢ .*

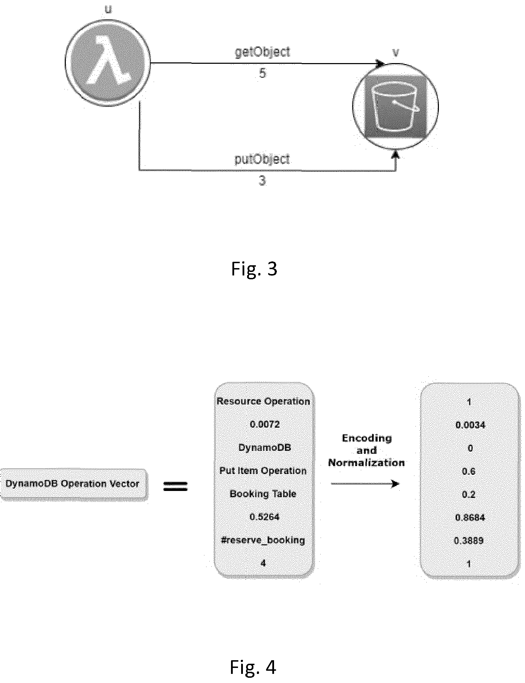

An illustration of this graph is presented in Figure 3. Fig. 3 shows an example of graph representation using multi-graphs and weighted edges.

**Graph features** - To represent the behavior of each data resource in the system, graph features were extracted for each node u ∈ *V_{wi}* for each graph representation *G_{wi}*. Common centrality measures are chosen from graph theory to represent the nodes. When computing the centrality measures, the weight of the edges is considered. Centrality measures are an essential concept in graph theory, and they help detect the importance of nodes in the graph. Importance is defined differently, depending on the centrality measure. When the graph represents a serverless application, the centrality measures can help identify security risks; for example, the degree centrality measure refers to the number of edges that connect to a node in the graph. When the nodes are cloud entities, a high value for the degree centrality measure means that there is a lot of access to a specific resource, which may imply a data theft attack. This feature generation process uses the following centrality measures: degree (the degree centrality is a measure of local centrality that is calculated from the immediate neighborhood links of a vertex), normalized degree (the degree centrality values are normalized by dividing by the maximum possible degree in a simple graph n-1 where n is the number of nodes in the graph), load centrality (the load centrality of a node is the fraction of all shortest paths that pass through that node), harmonic centrality (harmonic centrality of a node is the sum of the reciprocal of the shortest path distances from all other nodes to that node), local reaching centrality (the proportion of the graph that is reachable from the neighbors of the node), trophic levels, PageRank (designed for ranking web content, using hyperlinks between pages as a measure of importance), and closeness centrality (closeness centrality of a node In a connected graph is a measure of centrality in a network, calculated as the reciprocal of the sum of the length of the shortest paths between the node and all other nodes in the graph). The name of the resource is an additional feature.

**Anomaly detection** - A deep autoencoder model is used to learn the benign behavior of the data resources. Deep autoencoders (artificial neural networks that uncover and represent essential data features in an unsupervised method) are commonly used in the field of anomaly detection [8, 9, 33]. The input for the autoencoder is the graph features of the node representations of the data resources in multiple time windows. The maximum reconstruction error for each resource in the validation set serves as a threshold for the anomaly detector. In the test phase of the model, graphs were generated and the node's features were inserted into the model. If the reconstruction error is greater than the predefined threshold, the node is considered anomalous and an alert is raised. This means that the model has detected an anomalous behavior about the data resource in the given time window.

### Compromised Function Detection model

CFD focuses on serverless functions' flow and aims to detect deviations from their normal activity. The sequence of events occurring during the execution of each function is represented by a sequence of vectors, where each vector represents an event in the sequence.

This way, one can use the high granularity of the logs to model and detect abnormalities in the order of the events within a function execution as well as in the characteristics of each of these events. Anomaly detection is carried out using LSTM autoencoders, which detect abnormal activity in serverless functions.

**Preprocessing** - As detailed below, the data collected consists of *ApplicationFlows* of the activities of the applications in the cloud environment. From these *ApplicationFlows,* the method uses those *ContextualSequence* whose *contextType* is a serverless function (e.g., Lambda function). A *ContextualSequence* such as this contains information regarding the sequence of events following the invocation of a serverless function. In the preprocessing phase, in order to represent each function execution, a sequence of event vectors was created, using the *ContextualSequence* associated with the execution. Each vector represents an event that occurred in the *ContextualSequence.* The relevant features of each event are extracted from the log entry associated with the event, and new features are generated based on these features. The features extracted from the event's log entry and don't require any preprocessing include the *eventType, parentEventld, eventOperation, eventResource,* and *eventResourceType.* The new features generated include the *eventDuration* - the difference between the event's *startTime* and *endTime; relativeTime-* the time that passed since the beginning of the first event in the sequence and the beginning of the specific event that vector is associated with; and the depth of the event (the depth is one if the event has no *parentEventId;* otherwise the depth is the depth of the parent event + 1). Eventually, every vector is encoded and normalized. For each categorical feature's set of values, an additional value was added to represent a value that was never seen for this feature before. Then, the categorical features were encoded, based on the number of values that each feature has in the training set. Next, each feature's values are normalized to be between zero and one using min-max normalization based on each attribute's values across the training data of each function.

Fig. 4 shows an event vector associated with a put item operation on DynamoDB. Fig. 4 presents an example of an event vector associated with a putltem operation in DynamoDB, before and after it was encoded and normalized. Finally, the original sequences are used to create several new sequences based on a sliding window of a fixed size. The optimal window size for each function was determined using grid search.

**Anomaly detection** - In order to learn the patterns of the normal behavior of the serverless functions, a separate LSTM autoencoder was trained for each individual function. The LSTM autoencoder encodes and decodes each serverless function instance represented by a sequence of vectors. Then, the reconstruction error was used to determine the anomaly score of that instance. Using the generated sequences from the preprocessing stage as input to the LSTM autoencoders, each autoencoder studies the typical patterns of the sequences of the function it is associated with. The architecture of the network is identical for all of the autoencoders and is described below. Each autoencoder is trained using the runtime logs of a benign activity of the function associated with it. The present invention's model is then tested on the activity of each function with a predefined percentage of anomalies. The anomalies included the implantation of attacks on the functions. Each serverless function instance in the test set is also represented by a sequence of event vectors (described above). These sequences are fed to the trained LSTM autoencoder of that function, which in turn outputs the reconstructed sequence of vectors. Then, the MSE between the input vector sequence and the output vector sequence is calculated to obtain the reconstruction error. Those sequences whose reconstruction error is greater than a predefined threshold receive an anomaly score (that indicates how anomalous the data point is, which makes it possible to define its severity compared to other anomalies) of one and are flagged as possible attacks.

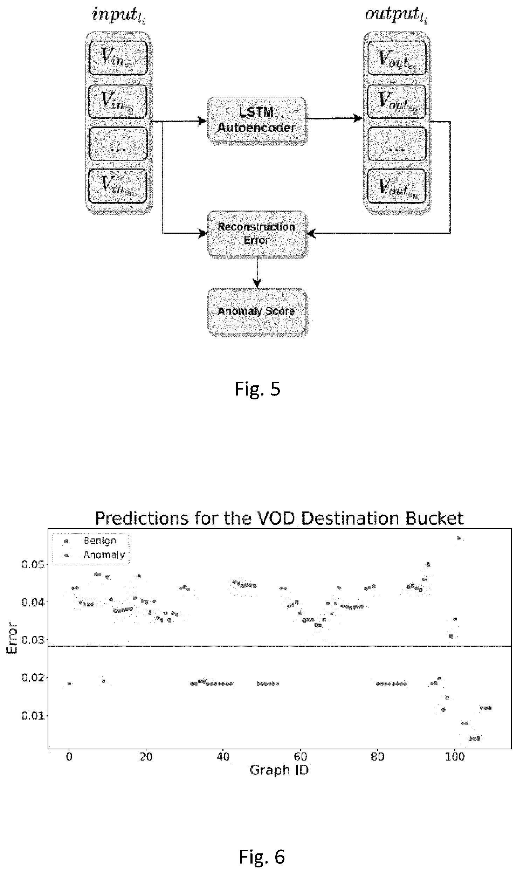

Fig. 5 shows a flow chart of using LSTM autoencoder for anomaly detection based on the reconstruction error. Fig. 5 provides an overview of the whole autoencoder process.

To analyze and evaluate the performance of the present invention's models, an experimental serverless cloud environment is required. In developing the testbed, the aim is to construct a testbed capable of: (1) covering several serverless development paradigms that utilize many types of serverless cloud resources, (2) generating a large amount of logging data through real-life activities, and (3) simulating common attack scenarios within the data. To achieve these capabilities, the Serverless Cybersecurity Evaluation Testbed was created.

### Testbed Applications

The testbed includes two applications: (1) an airline booking application,⁵, and (2) a Video On Demand (VOD) application.⁶ These specific applications are deployed, because they represent two different serverless development approaches and will be able to highlight the use of a variety of AWS's serverless services in the testbed. In the airline application, each serverless function (Lambda function) has a single specific use within the workflow, while the functions in the VOD application are more generic and can be used multiple times in different contexts.

### Airline Booking Application:

The application is deployed through AWS Amplify. Its frontend web server was developed in Vue js, and the backend was developed in JavaScript and Python. The application contains multiple REST API endpoints that allow users to interact with it. It contains a variety of AWS services: four DynamoDB tables, four S₃ buckets, SQS and SNS services (queue and notifications services), the Appsync API service, and 12 Lambda functions. Some of the Lambda functions are orchestrated using the AWS Step Function service. There are three main business processes in the airline booking application: The first type of process is an API request that fetches information from a DynamoDB table and returns the data to the user (loyalty points and the flight's catalog). This type of event is short-timed and contains single access to a data source in the system. The second type of process is the booking process. In this process, an API request to book a flight triggers a series of data access operations and Lambda function invocations that transfer information between them. This series of events is orchestrated by a step function. The third type of process is an event that is triggered by AWS EventBridge using time-based triggers.

### VOD Application:

The VOD application is deployed using the AWS CloudFormation service. This application decodes videos into a streaming format and stores them in a public S₃ bucket as part of its activity. It does not have any front end, and the back end is implemented using JavaScript. The application contains three S₃ buckets, two DynamoDB tables, and 17 Lambda functions. In contrast to the airline booking application which only one of its business processes is orchestrated by a step function, the VOD application contains four step functions that are responsible for the four main business processes of the application. Three of the processes are a part of the main process that converts the format of the video files: (1) ingest - checks the file's validity, (2) process - converts the file from a video file coding to a different type of coding using the AWS Elemental MediaConvert service, and (3) publish - creates a link to the file location in the cloud and sends it by mail to predefined mail address using the AWS Message Queuing Service (SQS). The fourth process is a mailing process that uses the AWS Simple Mailing Service (SES) to support video uploads through emails. There are two ways to interact with the application: upload the files manually to the source S₃ bucket or send mail to a predefined mail endpoint. Once the file is added to the source S₃ bucket, the rest of the process is done automatically via EventBridge triggers and step functions. Each application uses a unique DynamoDB table that contains the configuration information of the simulation itself, and the configuration table contains probabilities for each implemented attack.

The entire testbed is monitored by AWS Cloudtrail CloudWatch and X-Ray.

"Real-life" behavior was simulated in the applications and generated data for the experiments using the testbed framework that was implemented. To simulate the actions of real users, Python scripts were developed to activate functions in different logical orders. Simulating data for the two applications requires different approaches: The airline booking application required the simulator of the present invention to handle and navigate through its front-end website. On the other hand, the VOD application is dependent on either objects (files) being uploaded into an S₃ bucket or a mailing service to trigger its main workflow.

**Airline Booking Application.** traffic was simulated through the website that serves as the front end of the airline booking application. The simulation has fixed probabilities for different types of booking reservations (e.g., one-way or two-way). Once the simulator completes the booking reservation, the step function within the cloud environment is triggered and starts its workflow. Within that workflow, there are error-handling mechanisms that invoke different combinations of Lambda functions. To generate additional behavior patterns for the application of the present invention, some failure paths were added to the Lambda functions which are part of the error-handling process. The probability for the execution of these paths is defined in the airline booking application's configuration table. The total time of the simulation is dictated by the number of iterations that were set before the script is run. To simulate a real-life activity across an application, intervals that create gaps between users' activities with respect to the time of day and the users' actions were set. This creates a distributed activity load that is more aligned with the real behavior of users.

**VOD Application.** In the VOD application simulation, a staging S₃ bucket that imitates a virtual "local drive" of a user that uploads video files to the source bucket of the application was created. The simulator uses the AWS SDK for Python (Boto3) in order to perform the cloud operations that trigger the application's workflow (Upload files to S₃ buckets). To trigger the mailing flow, a domain was purchased via the Amazon Route 53 service and configured the Amazon SES to receive and store emails from that domain. In addition, to the direct uploads via Boto3, the simulator also uses Python's email library to send emails to the domain. To simulate an accurate timing of file uploads, the "Trending YouTube Video Statistics" dataset from Kaggle ⁷ was used. This dataset contains information about trending videos on YouTube. The distribution of the uploads of these videos was used to simulate the same distribution for the activity in the VOD application.

### Implemented attacks

Several attack scenarios demonstrating common and popular threats in the serverless threat landscape domain were implemented in the cybersecurity testbed. **Data leakage attack** - The attack scenario contains two main phases. In the first phase, an attacker elevates the permissions of the specific execution role of a serverless function. Later, the attacker uses the elevated permission of the serverless function and compromises the function, causing it to write private information to a public access data source. Note that the focus in the attack scenario is on the preliminary stage of data leakage rather than the leakage itself.

**Denial of wallet attack** - This attack scenario contains two different versions. The first version is implemented by repeating the same API call of accessing the data source multiple times as a part of a Lambda function's runtime. This leads to an increased amount of data transportation and an increased Lambda function runtime. The second version is designed to leave fewer tracks than the first one. In this scenario, the runtime of some of the functions is increased by a few seconds (2-3). This might not be suspicious if it is a one-time event, but if many functions are running for extended periods, they will consume more resources and ultimately increase the cost to the user. By that, one is able to simulate a scenario in which the function is being used for the purpose of crypto mining as in [19].

**Permission misuse attack** - This scenario simulates a misuse of permissions of a Lambda function that was granted permission to access and operate on a data source. In this case, the permissions are misused in order to change the context in which the function operates for the benefit of the attacker. This scenario also has several versions. In the first version, the order of the operations in the function's sequence is different than usual (e.g., instead of updating an item and then obtaining an item from a table, the function performs a get item operation and then updates that item). The second version involves the function performing a different operation than the one it usually performs (e.g., updating an entry in a table instead of adding a new entry to it). The third version involves adding an additional action to an application's workflow (e.g., adding additional access to a DynamoDB table). The abovementioned attacks are implemented within the main workflow of both of the applications. For each application, specific functions are choosen and "being infected" with the attack scenarios. During data collection, 10% of the instances of each "infected" function were configured to run the malicious code and logged the anomalous instances. This way, one was able to label each of the instances in the test set as benign or anomalous and use these labels for the evaluation of the threat detection models.

The VOD application simulator execution time is based on the number of files uploaded and processed. Twelve thousand files were uploaded for training, and 6,000 files were uploaded for testing. Data collection for training and testing took place over 24- and 12-hour periods, respectively. The execution time of the airline booking application is based on the number of iterations that were set for the airline booking simulator. In the training phase, 7,000 iterations were performed over 32 hours, and in the testing phase, 3,500 iterations were performed over 18 hours. The collected total number of events is summarized in Table 2 where one can see that the structure of the applications affects the number of events in the applications' runtime. The VOD application is data-driven, and its main workflow is based on accessing S₃ buckets and DynamoDB tables, as opposed to the airline application, in which the workflow is function-driven. This is reflected in the ratio between the number of data access events and Lambda invocation events in the applications' test sets. In the VOD application, the ratio is approximately 7: 1 in comparison to 2: 1 in the airline application. The invocations in the test set contain a percentage of the implemented attacks; for each function, a fixed anomaly percentage was configured, and based on that, each invocation was randomly selected to run the anomalous code or not. The final number of true anomalies for each function is presented in table 1.

**Table 1: The number of attacks in the serverless applications**

| **Attacks** | **Airline** | **VOD** |
|---|---|---|
| **Data Leakage** | 132 | 28 |
| **Denial of Wallet - Repeat Action** | 407 | 148 |
| **Denial of Wallet - Increased Duration** | 369 | 502 |
| **Permission Misuse - Change Operation Order** | 258 | 416 |
| **Permission Misuse - Different Action** | 423 | 0 |
| **Permission Misuse - Additional Action** | 133 | 19 |

**PMD data analysis** - PMD uses AWS X-Ray to collect the trace records and the permission usage events within them. The *appFlowId* of each application Flow is essential to PMD, since it helps build consistent permission usage sequences. 113,931 records were obtained for the airline booking application training set, 28,483 for the validation set, and 70,271 for the test set, which was taken from the application Flows and divided into 9-gram tokens, including the special tokens SEP and REQ. The anomalous tokens that the method of the present invention made predictions from are 641 9-gram tokens which represent 0.015% of the total tokens. 217,718 records were obtained for the VOD application training set, 54,430 for the validation set, and 129,909 for the test set, which was also taken from the application Flows and divided into 9-gram tokens, including the special tokens SEP and REQ. The anomalous tokens from which predictions were made are 153 9-gram tokens which represent 0.002% of the total tokens.

**GRLAD Data analysis** - The resource operation events that are used in GRLAD are provided by AWS CloudTrail. The graph representations of the resources generated in the environment were based on time windows of 30 minutes, with a sliding window of five minutes between the graph representations. In the VOD application, the training set contains 1,190 samples, and the test set contains 541 samples, 67 of which represent resources that were part of the data leakage attack (12% of the samples). The airline application training set contains 1,977 samples, and the test set contains 855 samples, 170 of which represent resources that were part of the data leakage attack (20% of the samples). Note that GRLAD aggregates the raw logs into graphs. Therefore, the number of data samples for the model is smaller than the total number of raw logs.

**CFD Data analysis** - CFD parses Contextual Sequences of events and generates a sequence of vectors relating to each serverless function's execution. In the VOD application, the training set contains 67,511 function sequences, and the test set contains 33,138 function sequences, 1,249 of which contain anomalies (about 4% of the samples). The airline application training set contains 30,456 function sequences, and the test set contains 14,967 function sequences, 1,562 of which contain anomalies (about 20% of the samples).

**Table 2: Total number of raw logs collected for the testbed simulation (the data is divided into data access calls - API calls of the data sources in the cloud environments (i.e., S₃ and DynamoDB); and Lambda function invocations).**

| **Application** | **Type** | **Train** | **Test** |
|---|---|---|---|
| | Data access calls | 900,871 | 447,528 |
| VOD | Lambda invocations | 127,806 | 77,416 |
| | Total | 1,028,677 | 524,944 |
| | Data access calls | 135,133 | 73,501 |
| Airline | Lambda invocations | 61,848 | 32,493 |
| | Total | 197,006 | 105,994 |

### Network architectures and hyperparameters

**PMD-** For an anomaly detector an LSTM network was used, consisting of: a size 20 embedding layer; *n* - 1 entries for each vector, where the *n* is the n-gram length; two hidden layers with 50 neurons each; and a dense layer, the size of the unique tokens created, and a softmax activation function. During training, the Adam optimizer was used, with a learning rate of 0.0003 (the learning rate is affected by decay where every 10, 000 steps the learning rate decays by 10%), a batch size of 16, and a cross-entropy loss function over 15 epochs. The Keras implementation was used with its default settings, except for the hyperparameters mentioned above.

**GRLAD-** Grid search was used to determine the deep autoencoder's hyperparameters (e.g., the number of hidden layers, the network's learning rate, and the activation function of the output layer); for each application, a separate grid search was performed. In addition, the model's features are based on weighted graph theory measures; two different weight functions were experimented with for the graph edges: the sum of operations and the inverted sum of operations. The final parameters for the VOD application are: a learning rate of 0.1 and a single size [4] hidden layer for the encoder and decoder; the final activation function is ReLU, and the weight features are based on the combination of the sum and the inverted sum of operations. The final parameters for the airline booking application are: a learning rate of 0.001 and three sizes [8, 6, 4] hidden layers for the encoder and decoder; the final activation function is linear, and the weight features are based on the sum of operations solely.

**CFD-** Grid search was used to choose the parameters for each autoencoder individually, based on the best separation between the anomalous points and the benign ones obtained for each autoencoder (i.e., the number of epochs, size of each input sequence (the sliding window size), and threshold for the classification of each instance). The autoencoders' network is identical for all of the functions. During the training phase of the LSTM autoencoders, grid search was used to tune the hyperparameters. The choices were based on the parameters that produced the best results (according to the metrics mentioned below). The number of hidden layers and neurons in each layer, the activation functions within each layer, and the optimization algorithm for the network have also been experimented with. The final selected architecture consists of five fully connected feedforward hidden layers. There are 128 and 64 neurons in each of the encoder and decoder layers (from the outer layer to the inner one), and the activation function for these layers is ReLU. A middle layer containing 64 neurons replicates the inner layer of the encoder by a factor equal to the number of events in the sequence. In addition to that, Adam was used as the network's optimizer.

It is important to note that the main goal of the model's predictions is to generate accurate alerts. The metrics described below were used to examine the models' performance. The results obtained for each application for each of the attacks are presented in Table 3.

*Precision* - measures the fraction of true anomalies out of the samples classified as anomalies. A high level of precision would indicate that the models of the present invention can assist the security teams and enable them to focus their efforts on real cases instead of false alerts.

*Recall* - measures the fraction of samples classified as anomalies out of the total number of true anomalies. Similarly, a high score here would indicate that the models are trustworthy and security teams can rely on their indication to know if their system was attacked.

*F1 Score* - the harmonic mean between the precision and recall. Both of these are important measures, but sometimes one increases in value at the expense of the other. A high score indicates that both measures were taken into consideration.

*FPR (False Positive Rate)* - measures the number of samples incorrectly classified as anomalies out of all of the benign samples. The goal is to have a low FPR since a high FPR would require the security teams to resolve many false alerts. FNR (False Negative Rate) - measures the number of samples incorrectly classified as benign out of all of the anomalous samples. The aim is to achieve a low FNR, as a high FNR could affect a model's relevance since a model that fails to detect a high percentage of attacks cannot be trusted.

It was found that PMD's ability to recognize anomalies by examining the logs' semantic tokens makes it very effective at detecting anomalies in the logs. Overall, the airline booking application is much simpler in terms of the business flow, as there is not much variability in the data; the results reflect this, as high precision and zero false positives were obtained. The VOD application had more step functions and S₃ buckets, so the variability created more possible options for each predicted token. This model showed its worst performance with the misuse attack in the VOD application. This is due to the high similarity to a legitimate interaction in this context, which increases both the probability that the attack is a benign action as well as requiring to increase the accepted threshold to detect the attack, which will increase the FPR.

In the case of the airline booking application, the model successfully detected the attacks, despite the low threshold (below 0.03 probability to be a true event), whereas the VOD application had less success detecting the attacks, except for the data leakage attack, which it successfully detected.

The denial of wallet attacks in the VOD application resulted in a higher probability of a true event than with the airline booking application. The anomalous data of this attack type was closer to the benign events in terms of probability, and therefore changing the threshold results in a higher rate of false positives, which would compromise the confidence in the model. The misuse attacks had a much higher probability and inconclusiveness than expected, ranging from 0.033 to 0.046; a considerable amount of benign events are included within that threshold range, which would also compromise the confidence in the model.

GRLAD. As seen in the table, the data leakage model can detect most of the data leakage attacks while keeping the FPR and FNR low. An example of reconstruction errors in the destination bucket of the VOD application is presented in Fig 6. This bucket was part of the data leakage attack in the VOD application. A large difference in the reconstruction error of the node representations with benign activity compared to those with anomalous activity can be observed. As can be seen in the table, the other two methods are also able to detect the data leakage attack scenario.

Fig. 6 shows a graph with an example of GRLAD's reconstruction errors for the destination bucket in the VOD application. The x-axis shows different node representations over time, and the *y*-axis shows the model reconstruction error. The threshold for the anomaly detector is marked in red, and the points above the threshold are considered anomalous by the model.

GRLAD's advantage is that it uses "simpler" logs than the other models. In addition, GRLAD does not rely directly on the serverless function and can operate on interactions with data resources beyond the scope of serverless functions.

CFD. As seen in the table, the precision, recall, and F1 score are high, while the FPR and FNR are low for most of the attacks. Among the attacks, the misuse attack (changing the order of the operations) attack in the airline application was notable for its low precision score. An interesting finding emerged from the investigation of the misclassified samples: The attack caused some execution paths to change, even though these paths were not intended to be anomalous. Therefore, these instances were not flagged as anomalies, and once the model alerted about them they were tagged as false positives. It is also important to note that in the experiment, AWS X-Ray was used to collect the data. AWS X-Ray is not intended for production (i.e., real-time execution) due to the overhead it adds to the application's runtime, especially when monitoring 100% of the activities. In addition, X-Ray specializes in monitoring AWS services and not third-party interactions, which may result in incomplete data. Given the above, it is recommend using the model sparingly in production, or as a forensic tool in staging or sandbox environments.

**Table 3: The results of the threat detection models**

| **Application** | **Model** | **Attack** | **Precision** | **Recall** | **F1 Score** | **FPR** | **FNR** |
|---|---|---|---|---|---|---|---|
| | **GRLAD** | Data Leakage | 0.863 | 1 | 0.927 | 0.039 | 0 |
| | **PMD** | Data Leakage | 1 | 1 | 1 | 0 | 0 |
| | | Denial of Wallet - Many Operations | 1 | 1 | 1 | 0 | 0 |
| **Airline Booking** | | Misuse - Additional Operation | 1 | 1 | 1 | 0 | 0 |
| | **CFD** | Data Leakage | 1 | 1 | 1 | 0 | 0 |
| | | Denial of Wallet - Many Operations | 0.993 | 1 | 0.997 | 0.001 | 0 |
| | | Denial of Wallet - Increased Duration | 1 | 1 | 1 | 0 | 0 |
| | | Misuse - Additional Operation | 1 | 1 | 1 | 0 | 0 |
| | | Misuse - Change Order of Operations | 0.486 | 1 | 0.654 | 0.085 | 0 |
| | | Misuse - Perform a Different Operation | 0.993 | 1 | 0.997 | 0.001 | 0 |
| | **GRLAD** | Data Leakage | 0.807 | 1 | 0.893 | 0.033 | 0 |
| | **PMD** | Data Leakage | 1 | 1 | 1 | 0 | 0 |
| | | Denial of Wallet - Many Operations | 0.98 | 0.933 | 0.956 | 0.005 | 0.02 |
| | | Misuse - Additional Operation | 0 | 0 | 0 | 0 | 1 |
| **VOD** | **CFD** | Data Leakage | 1 | 1 | 1 | 0 | 0 |
| | | Denial of Wallet - Many Operations | 0.987 | 1 | 0.993 | 0.001 | 0 |
| | | Denial of Wallet - Increased Duration | 0.995 | 1 | 0.997 | 0.001 | 0 |
| | | Misuse - Additional Operation | 1 | 1 | 1 | 0 | 0 |
| | | Misuse - Change Order of Operations | 0.998 | 1 | 0.999 | 0.001 | 0 |

The models were evaluated by creating a comprehensive cyber-security testbed consisting of two applications that cover different serverless development paradigms. In the testbed, several attack scenarios were implemented for each application. The evaluation demonstrates that it is possible to establish a threat detection model based solely on the information gained from generic logging that is capable of successfully detecting intrusions while maintaining a very low false alarm rate. This is achieved thanks to each model's focus on a particular threat type rather than trying to create a model capable of detecting all kinds of threats. The combination of use-case-specific models that use basic logging (e.g., ResourceOperation logs) for PMD and GRLAD), with a more general model that utilizes higher granularity logging (e.g., CFD) covers most examined threats while eliminating most false alerts.

Although deep learning methods have many advantages, one of their main shortcomings is the limited ability to fully understand how and why they generate their results. When it comes to security, it is extremely important to understand the results, rather than just receiving alerts. The ability to identify attacks, as well as their patterns, and explain the models' decisions could significantly increase security teams' trust in the proposed threat detection models.

As various embodiments and examples have been described and illustrated, it should be understood that variations will be apparent to one skilled in the art without departing from the principles herein. Accordingly, the invention is not to be limited to the specific embodiments described and illustrated in the drawings.

### REFERENCES

**[1]** Kalev Alpernas, Cormac Flanagan, Sadjad Fouladi, Leonid Ryzhyk, Mooly Sagiv, Thomas Schmitz, and Keith Winstein. 2018. Secure serverless computing using dynamic information flow control. arXiv preprint arXiv:1802.08984 (2018).
**[2]** Andy Brown, Aaron Tuor, Brian Hutchinson, and Nicole Nichols. 2018. Recurrent neural network attention mechanisms for interpretable system log anomaly detection. In Proceedings of the First Workshop on Machine Learning for Computing Systems. 1-8.
**[3]** Rishabh Chawla. 2021. Information Flow Control for Serverless Systems. International Journal of Advanced Computer Science and Applications 12, 9 (2021).
**[4]** Pubali Datta, Prabuddha Kumar, Tristan Morris, Michael Grace, Amir Rahmati, and Adam Bates. 2020. Valve: Securing function workflows on serverless computing platforms. In Proceedings of The Web Conference 2020. 939-950.
**[5]** Min Du, Feifei Li, Guineng Zheng, and Vivek Srikumar. 2017. Deeplog: Anomaly detection and diagnosis from system logs through deep learning. In Proceedings of the 2017 ACM SIGSAC Conference on Computer and Communications Security. 1285-1298.
**[6]** Patrick Duessel, Shoufu Luo, Ulrich Flegel, Sven Dietrich, and Michael Meier. 2020. Tracing Privilege Misuse Through Behavioral Anomaly Detection in Geometric Spaces. In 2020 13th International Conference on Systematic Approaches to Digital Forensic Engineering (SADFE). IEEE, 22-31.
**[7]** Nathan Eddy. 2022. Cloud misconfig exposes 3TB of sensitive airport data in Amazon S3 Bucket: 'lives at stake'. (Jul 2022). https://www.darkreading.com/application-security/ cloud-misconfig-exposes-3tb-sensitive-airport-data-amazon-s3-bucket
**[8]** Mohammadmahdi Ghorbani, Fereydoun Farrahi Moghaddam, Mengyuan Zhang, Makan Pourzandi, Kim Khoa Nguyen, and Mohamed Cheriet. 2021. DistApp-Gaurd: Distributed application behaviour profiling in cloud-based environment. In Annual Computer Security Applications Conference. 837-848.
**[9]** Dong Gong, Lingqiao Liu, Vuong Le, Budhaditya Saha, Moussa Reda Mansour, Svetha Venkatesh, and Anton van den Hengel. 2019. Memorizing normality to detect anomaly: Memory-augmented deep autoencoder for unsupervised anomaly detection. In Proceedings of the IEEE/CVF International Conference on Computer Vision. 1705-1714.
**[10]** Haixuan Guo, Shuhan Yuan, and Xintao Wu. 2021. Logbert: Log anomaly detection via bert. In 2021 International Joint Conference on Neural Networks (IJCNN). IEEE, 1-8.
**[11]** Edan Habler and Asaf Shabtai. 2018. Using LSTM encoder-decoder algorithm for detecting anomalous ADS-B messages. Computers & Security 78 (2018), 155-173.
**[12]** Hassan B Hassan, Saman A Barakat, and Qusay I Sarhan. 2021. Survey on serverless computing. Journal of Cloud Computing 10, 1 (2021), 1-29.
**[13]** Ren-Hung Hwang, Min-Chun Peng, Chien-Wei Huang, Po-Ching Lin, and Van-Linh Nguyen. 2020. An unsupervised deep learning model for early network traffic anomaly detection. IEEE Access 8 (2020), 30387-30399.
**[14]** Amani S. Ibrahim, James Hamlyn-Harris, and John Grundy. 2016. Emerging Security Challenges of Cloud Virtual Infrastructure. arXiv. https://doi.org/10. 48550/ARXIV.1612.09059
**[15]** Deepak Sirone Jegan, Liang Wang, Siddhant Bhagat, Thomas Ristenpart, and Michael Swift. 2020. Guarding Serverless Applications with SecLambda. arXiv preprint arXiv:2011.05322 (2020).
**[16]** Xing Li, Xue Leng, and Yan Chen. 2021. Securing Serverless Computing: Challenges, Solutions, and Opportunities. arXiv preprint arXiv:2105.12581 (2021).
**[17]** Fucheng Liu, Yu Wen, Dongxue Zhang, Xihe Jiang, Xinyu Xing, and Dan Meng. 2019. Log2vec: A heterogeneous graph embedding based approach for detecting cyber threats within enterprise. In Proceedings of the 2019 ACM SIGSAC Conference on Computer and Communications Security. 1777-1794.
**[18]** Zhaoli Liu, Tao Qin, Xiaohong Guan, Hezhi Jiang, and Chenxu Wang. 2018. An integrated method for anomaly detection from massive system logs. IEEE Access 6 (2018), 30602-30611.
**[19]** Constantin Lucian. 2022. New cryptomining malware targets AWS Lambda. (2022). https://www.csoonline.com/article/3656788/ new-cryptomining-malware-targets-aws-lambda.html
**[20]** Theo Lynn, Pierangelo Rosati, Arnaud Lejeune, and Vincent Emeakaroha. 2017. A Preliminary Review of Enterprise Serverless Cloud Computing (Function-as-a-Service) Platforms. In 2017 IEEE International Conference on Cloud Computing Technology and Science (CloudCom). 162-169. https://doi.org/10.1109/CloudCom. 2017.15
**[21]** Jussi Nupponen and Davide Taibi. 2020. Serverless: What it Is, What to Do and What Not to Do. In 2020 IEEE International Conference on Software Architecture Companion (ICSA-C). 49-50. https://doi.org/10.1109/ICSA-C50368.2020.00016
**[22]** Matthew Obetz, Stacy Patterson, and Ana Milanova. 2019. Static Call Graph Construction in {AWS} Lambda Serverless Applications. In 11th USENIX Workshop on Hot Topics in Cloud Computing (HotCloud 19).
**[23]** Wesley O'Meara and Ruth Lennon. 2020. Serverless Computing Security: Protecting Application Logic. 1-5. https://doi.org/10.1109/ISSC49989.2020.9180214
**[24]** Guansong Pang, Chunhua Shen, Longbing Cao, and Anton Van Den Hengel. 2021. Deep learning for anomaly detection: A review. ACM Computing Surveys (CSUR) 54, 2 (2021), 1-38.
**[25]** T. Punz. 2022. Privilege misuse. (2022). https://www.securnite.com/index.php/ 2022/05/01/privilege-misuse/
**[26]** Arnav Sankaran, Pubali Datta, and Adam Bates. 2020. Workflow integration alleviates identity and access management in serverless computing. In Annual Computer Security Applications Conference. 496-509.
**[27]** Author:Tara Seals and Tara Seals. 2020. Microsoft Leaves 250M Customer Service Records Open to the Web. (Jan 2020). https://threatpost.com/ microsoft-250m-customer-service-records-open/152086/
**[28]** Balaram Sharma, Prabhat Pokharel, and Basanta Joshi. 2020. User behavior analytics for anomaly detection using LSTM autoencoder-insider threat detection. In Proceedings of the 11th International Conference on Advances in Information Technology. 1-9.
**[29]** Skyscanner. 2020. LambdaGuard. (2020). https://github.com/Skyscanner/ LambdaGuard
**[30]** Aaron Randall Tuor, Ryan Baerwolf, Nicolas Knowles, Brian Hutchinson, Nicole Nichols, and Robert Jasper. 2018. Recurrent neural network language models for open vocabulary event-level cyber anomaly detection. In Workshops at the thirty-second AAAI conference on artificial intelligence.
**[31]** Xu Zhang, Yong Xu, Lin, et al. 2019. Robust log-based anomaly detection on unstable log data. In Proceedings of the 2019 27th ACM Joint Meeting on European Software Engineering Conference and Symposium on the Foundations of Software Engineering. 807-817.
**[32]** Zhijun Zhao, Chen Xu, and Bo Li. 2021. A LSTM-Based Anomaly Detection Model for Log Analysis. Journal of Signal Processing Systems 93, 7 (2021), 745-751.
[33] Chong Zhou and Randy C Paffenroth. 2017. Anomaly detection with robust deep autoencoders. In Proceedings of the 23rd ACM SIGKDD international conference on knowledge discovery and data mining. 665-674.
[34] Dimitrios Zissis and Dimitrios Lekkas. 2012. Addressing cloud computing security issues. Future Generation computer systems 28, 3 (2012), 583-592.

## Claims

1. In a serverless cloud computing environment consisting of one or more computerized devices having a memory and at least one processor and being capable of executing and running application code, a method for data leakage detection in a serverless cloud environment, comprising:
a) providing an unsupervised deep learning data leakage detection model configured to detect anomalies in permission usage, wherein the unsupervised deep learning data leakage detection model is configured to detect an act of writing sensitive information to a public access bucket, upon identifying at least one of a misconfiguration and an elevation of permissions in a serverless function; and
b) using said unsupervised deep learning data leakage detection model to detect a predefined type of writing information to said bucket in an environment that contains legitimate activities involving said bucket.

2. A method according to claim 1, further comprising detecting of misconfiguration or an elevation of permissions in a specific serverless function.

3. A method according to claim 1, wherein LSTM autoencoders are used to model the normal behavior of each serverless function.

4. A method according to claim 1, wherein the data leakage detection model performs the following steps:
a) generating graph representations of the cloud environment;
b) generating features for each node in the graph;
c) training a deep autoencoder to reconstruct each node's features;
d) predicting the anomaly score of each node, based on the autoencoder's reconstruction error.

5. A method according to claim 4, wherein the data leakage detection model utilizes graphs and uses a deep autoencoder to learn the connections between different system resources.

6. A method according to claim 1, further comprising a preprocessing phase, in which the model receives a stream of events and returns a set of graph feature records that serve as input to the deep autoencoder.

7. A method according to claim 4, wherein the preprocessing phase consists of:
a) graph construction; and
b) feature extraction.

8. A method according to claim 4, wherein the behavior of the different services in the cloud environment, is obtained by constructing directed weighted multigraphs that contain multiple edges between two nodes.

9. A method according to claim 4, wherein the behavior of each data resource in the system is represented by graph features extracted for each node, for each graph representation, where the nodes are represented using common centrality measures that are chosen from graph theory.

10. A method according to claim 4, wherein whenever the graph represents a serverless application, centrality measures are used to identify security risks.

11. A method according to claim 10, wherein the centrality measures are selected from the group of: degree, normalized degree, load centrality, harmonic centrality, local reaching centrality, trophic levels, PageRank, and closeness centrality.

12. A serverless cloud computing environment consisting of one or more computerized devices having a memory and at least one processor and being capable of executing and running application code, said at least one processor is adapted to:
a) detect data leakage in said serverless cloud environment by providing an unsupervised deep learning data leakage detection model configured to detect anomalies in permission usage, wherein the unsupervised deep learning data leakage detection model is configured to detect an act of writing sensitive information to a public access bucket, upon identifying at least one of a misconfiguration and an elevation of permissions in a serverless function; and
b) use said unsupervised deep learning data leakage detection model to detect a predefined type of writing information to said bucket in an environment that contains legitimate activities involving said bucket.

13. A serverless cloud computing environment according to claim 12, in which misconfiguration or an elevation of permissions are detected in a specific serverless function.

14. A serverless cloud computing environment according to claim 12, in which LSTM autoencoders are used to model the normal behavior of each serverless function.

15. A serverless cloud computing environment according to claim 12, in which the data leakage detection model performs the following steps:
a) generating graph representations of the cloud environment;
b) generating features for each node in the graph;
c) training a deep autoencoder to reconstruct each node's features;
d) predicting the anomaly score of each node, based on the autoencoder's reconstruction error.

## Patentansprüche

1. Verfahren zur Erkennung von Datenlecks in einer serverlosen Cloud-Umgebung, die aus einer oder mehreren computerisierten Vorrichtungen besteht, die einen Speicher und mindestens einen Prozessor aufweisen und in der Lage sind, Anwendungscode auszuführen und laufen zu lassen, umfassend:
a) Bereitstellen eines unüberwachten datenleck-erkennenden Deep-Learning-Modells, das dazu ausgelegt ist, Anomalien bei Berechtigungsnutzung zu erkennen, wobei das unüberwachte datenleck-erkennenden Deep-Learning-Modell dazu ausgelegt ist, einen Vorgang von Schreiben sensibler Informationen in einen Bucket mit öffentlichem Zugang zu erkennen, nachdem mindestens eine von einer Fehlkonfiguration und einer Erhöhung von Berechtigungen in einer serverlosen Funktion identifiziert wurde; und
b) Verwenden des unüberwachten datenleck-erkennenden Deep-Learning-Modells, um einen vordefinierten Typ von Schreibinformationen in den Bucket in einer Umgebung zu erkennen, die legitime Aktivitäten enthält, die den Bucket involvieren.

2. Verfahren nach Anspruch 1, ferner umfassend Erkennen von Fehlkonfiguration oder einer Erhöhung von Berechtigungen in einer spezifischen serverlosen Funktion.

3. Verfahren nach Anspruch 1, wobei LSTM-Autoencoder verwendet werden, um das normale Verhalten jeder serverlosen Funktion zu modellieren.

4. Verfahren nach Anspruch 1, wobei das datenleck-erkennenden Modell die folgenden Schritte ausführt:
a) Erzeugen von Graphendarstellungen der Cloud-Umgebung;
b) Erzeugen von Merkmalen für jeden Knoten in dem Graphen;
c) Trainieren eines Deep-Autoencoders, um die Merkmale jedes Knotens zu rekonstruieren;
d) Vorhersagen des Anomalie-Scores jedes Knotens basierend auf dem Rekonstruktionsfehler des Autoencoders.

5. Verfahren nach Anspruch 4, wobei das datenleck-erkennenden Modell Graphen nutzt und einen Deep-Autoencoder verwendet, um die Verbindungen zwischen verschiedenen Systemressourcen zu erlernen.

6. Verfahren nach Anspruch 1, ferner umfassend eine Vorverarbeitungsphase, in der das Modell einen Ereignisstrom empfängt und einen Satz von Graphenmerkmalsdatensätzen zurückgibt, die als Eingabe in den Deep-Autoencoder dienen.

7. Verfahren nach Anspruch 4, wobei die Vorverarbeitungsphase besteht aus:
a) Graphenkonstruktion; und
b) Merkmalsextraktion.

8. Verfahren nach Anspruch 4, wobei das Verhalten der verschiedenen Dienste in der Cloud-Umgebung durch Konstruieren gerichteter gewichteter Multigraphen erhalten wird, die mehrere Kanten zwischen zwei Knoten enthalten.

9. Verfahren nach Anspruch 4, wobei das Verhalten jeder Datenressource in dem System durch Graphenmerkmale dargestellt wird, die für jede Graphendarstellung für jeden Knoten extrahiert werden, wo die Knoten unter Verwendung gemeinsamer Zentralitätsmaße dargestellt werden, die aus der Graphentheorie ausgewählt werden.

10. Verfahren nach Anspruch 4, wobei, wann immer der Graph eine serverlose Anwendung darstellt, Zentralitätsmaße verwendet werden, um Sicherheitsrisiken zu identifizieren.

11. Verfahren nach Anspruch 10, wobei die Zentralitätsmaße ausgewählt werden aus der Gruppe bestehend aus: Grad, normalisiertem Grad, Lastzentralität, harmonischer Zentralität, local reaching centrality, trophischen Ebenen, PageRank und Nähezentralität.

12. Serverlose Cloud-Computing-Umgebung, bestehend aus einer oder mehreren computerisierten Vorrichtungen, die einen Speicher und mindestens einen Prozessor aufweisen und in der Lage sind, Anwendungscode auszuführen und laufen zu lassen, wobei der mindestens eine Prozessor ausgelegt ist, um:
a) Datenlecks in der serverlosen Cloud-Umgebung zu erkennen durch Bereitstellen eines unüberwachten datenleck-erkennenden Deep-Learning-Modells das dazu ausgelegt ist, Anomalien bei der Berechtigungsnutzung zu erkennen, wobei das unüberwachte datenleck-erkennenden Deep-Learning-Modell dazu ausgelegt ist, einen Vorgang von Schreiben sensibler Informationen in einen Bucket mit öffentlichem Zugang zu erkennen, nachdem mindestens eine von einer Fehlkonfiguration und einer Erhöhung von Berechtigungen in einer serverlosen Funktion identifiziert wurde; und
b) das unüberwachte datenleck-erkennenden Deep-Learning-Modells zu verwenden, um einen vordefinierten Typ von Schreibinformationen in den Bucket in einer Umgebung zu erkennen, die legitime Aktivitäten enthält, die den Bucket involvieren.

13. Serverlose Cloud-Computing-Umgebung nach Anspruch 12, in der Fehlkonfiguration oder eine Erhöhung von Berechtigungen in einer spezifischen serverlosen Funktion erkannt werden.

14. Serverlose Cloud-Computing-Umgebung nach Anspruch 12, in der LSTM-Autoencoder verwendet werden, um das normale Verhalten jeder serverlosen Funktion zu modellieren.

15. Serverlose Cloud-Computing-Umgebung nach Anspruch 12, in der das datenleck-erkennenden Modell die folgenden Schritte ausführt:
a) Erzeugen von Graphendarstellungen der Cloud-Umgebung;
b) Erzeugen von Merkmalen für jeden Knoten in dem Graphen;
c) Trainieren eines Deep-Autoencoders, um die Merkmale jedes Knotens zu rekonstruieren;
d) Vorhersagen des Anomalie-Scores jedes Knotens basierend auf dem Rekonstruktionsfehler des Autoencoders.

## Revendications

1. Dans un environnement informatique de nuage sans serveur constitué d'un ou de plusieurs appareils informatiques ayant une mémoire et au moins un processeur et étant capables d'exécuter et de faire fonctionner du code d'application, procédé de détection de fuite de données dans un environnement de nuage sans serveur, comprenant les étapes suivantes :
a) fournir un modèle de détection de fuite de données d'apprentissage profond non supervisé configuré pour détecter des anomalies dans un usage de permission, dans lequel le modèle de détection de fuite de données d'apprentissage profond non supervisé est configuré pour détecter un acte d'écriture d'informations sensibles dans un compartiment d'accès public, après avoir identifié au moins un élément parmi une mauvaise configuration et une élévation de permissions dans une fonction sans serveur ; et
b) utiliser ledit modèle de détection de fuite de données d'apprentissage profond non supervisé pour détecter un type prédéfini d'écriture d'informations dans ledit compartiment dans un environnement qui contient des activités légitimes impliquant ledit compartiment.

2. Procédé selon la revendication 1, comprenant en outre la détection d'une mauvaise configuration ou d'une élévation de permissions dans une fonction sans serveur particulière.

3. Procédé selon la revendication 1, dans lequel on utilise des auto-encodeurs LSTM pour modéliser le comportement normal de chaque fonction sans serveur.

4. Procédé selon la revendication 1, dans lequel le modèle de détection de fuite de données exécute les étapes suivantes :
a) générer des représentations graphiques de l'environnement de nuage ;
b) générer des caractéristiques pour chaque nœud du graphe ;
c) entraîner un auto-encodeur profond pour reconstruire les caractéristiques de chaque nœud ;
d) prédire le score d'anomalie de chaque nœud d'après l'erreur de reconstruction de l'auto-encodeur.

5. Procédé selon la revendication 4, dans lequel le modèle de détection de fuite de données exploite des graphes et utilise un auto-encodeur profond pour apprendre les connexions entre les différentes ressources de système.

6. Procédé selon la revendication 1, comprenant en outre une phase de prétraitement, dans laquelle le modèle reçoit un flux d'évènements et renvoie un ensemble d'enregistrements de caractéristique de graphe qui sert d'entrée à l'auto-encodeur profond.

7. Procédé selon la revendication 4, dans lequel la phase de prétraitement comprend :
a) une construction de graphe ; et
b) une extraction de caractéristique.

8. Procédé selon la revendication 4, dans lequel le comportement des différents services dans l'environnement de nuage est obtenu en construisant des multigraphes pondérés orientés qui contiennent plusieurs arêtes entre deux nœuds.

9. Procédé selon la revendication 4, dans lequel le comportement de chaque ressource de données dans le système est représenté par des caractéristiques de graphe extraites pour chaque nœud, pour chaque représentation graphique, où les nœuds sont représentés en utilisant des mesures de centralité courantes qui sont choisies dans la théorie des graphes.

10. Procédé selon la revendication 4, dans lequel à chaque fois que le graphe représente une application sans serveur, on utilise des mesures de centralité pour identifier des risques de sécurité.

11. Procédé selon la revendication 10, dans lequel les mesures de centralité sont sélectionnées dans le groupe comprenant : le degré, le degré normalisé, la centralité de charge, la centralité harmonique, la centralité de portée locale, les niveaux trophiques, *PageRank*, et la centralité de proximité.

12. Environnement informatique de nuage sans serveur constitué d'un ou de plusieurs appareils informatiques ayant une mémoire et au moins un processeur et étant capables d'exécuter et de faire fonctionner du code d'application, ledit au moins un processeur étant adapté pour :
a) détecter une fuite de données dans ledit environnement de nuage sans serveur en fournissant un modèle de détection de fuite de données d'apprentissage profond non supervisé configuré pour détecter des anomalies dans un usage de permission, dans lequel le modèle de détection de fuite de données d'apprentissage profond non supervisé est configuré pour détecter un acte d'écriture d'informations sensibles dans un compartiment d'accès public, après avoir identifié au moins un élément parmi une mauvaise configuration et une élévation de permissions dans une fonction sans serveur ; et
b) utiliser ledit modèle de détection de fuite de données d'apprentissage profond non supervisé pour détecter un type prédéfini d'écriture d'informations dans ledit compartiment dans un environnement qui contient des activités légitimes impliquant ledit compartiment.

13. Environnement informatique de nuage sans serveur selon la revendication 12, dans lequel on détecte une mauvaise configuration ou une élévation de permissions dans une fonction sans serveur particulière.

14. Environnement informatique de nuage sans serveur selon la revendication 12, dans lequel on utilise des auto-encodeurs LSTM pour modéliser le comportement normal de chaque fonction sans serveur.

15. Environnement informatique de nuage sans serveur selon la revendication 12, dans lequel le modèle de détection de fuite de données exécute les étapes suivantes :
a) générer des représentations graphiques de l'environnement de nuage ;
b) générer des caractéristiques pour chaque nœud du graphe ;
c) entraîner un auto-encodeur profond pour reconstruire les caractéristiques de chaque nœud ;
d) prédire le score d'anomalie de chaque nœud d'après l'erreur de reconstruction de l'auto-encodeur.
